# EUROPEAN PATENT APPLICATION

(11) **EP 1 215 143 A1**
(43) Date of publication of application: **19.06.2002**
(21) Application number: 00830803.3
(22) Date of filing: 05.12.2000
(51) Int. Cl.: B65G 47/84, B65B 43/46, B31B 1/74

(54) **Conveyor assembly for a unit for applying opening devices to sealed packages**

(71) Applicant: Tetra Laval Holdings & Finance S.A., 1009 Pully (CH)
(72) Inventor: Desogus, Michele, 41100 Modena (IT); Baldini, Claudio, 41015 Nontantola (IT)
(74) Representative: Franzolin, Luigi

(57) **Abstract**

There is described a conveyor assembly (1) for a unit (10) for applying opening devices (2) to sealed packages (3) of pourable food products and at pierceable portions (11) of the packages (3). The conveyor assembly (1) has a number of supporting and conveying devices (16) for feeding respective packages (3) along a transfer path (P), and each having a frame (35, 60, 86) movable along the transfer path (P), and supporting means (61, 85) supporting a respective package (3) and fitted to the frame (35, 60, 86) so as to move in a first and a second direction (X, Y) perpendicular to each other, and so enable the position of the package (3) to be adjusted prior to application of the respective opening device (2).

## Description

The present invention relates to an improved conveyor assembly for a unit for applying opening devices to sealed packages of pourable food products.

As is known, many pourable food products, such as fruit juice, UHT (ultra-high-temperature processed) milk, wine, tomato sauce, etc., are sold in packages made of sterilized packaging material.

A typical example of such a package is the parallelepiped-shaped package for liquid or pourable food products known as Tetra Brik Aseptic (registered trademark), which is formed by folding and sealing a web of laminated packaging material. The packaging material has a multilayer structure comprising a layer of fibrous material, e.g. paper, covered on both sides with layers of heat-seal plastic material, e.g. polyethylene, and, in the case of aseptic packages for long-storage products, such as UHT milk, also comprises a layer of oxygen-barrier material defined, for example, by an aluminium film, which is superimposed on a layer of heat-seal plastic material and is in turn covered with another layer of heat-seal plastic material eventually defining the inner face of the package contacting the food product.

As is known, such packages are made on fully automatic packaging machines, on which a continuous tube is formed from the web-fed packaging material; the web of packaging material is sterilized on the packaging machine itself, e.g. by applying a chemical sterilizing agent, such as a hydrogen peroxide solution, which, after sterilization, is removed, e.g. vaporized by heating, from the surfaces of the packaging material; and the web of packaging material so sterilized is maintained in a closed sterile environment, and is folded and sealed longitudinally to form a vertical tube.

The tube is filled with the sterilized or sterile-processed food product, and is sealed and cut at equally spaced cross sections to form pillow packs, which are then folded mechanically to form the finished, e.g. substantially parallelepiped-shaped, packages.

Alternatively, the packaging material may be cut into blanks, which are formed into packages on forming spindles, and the resulting packages are filled with the food product and sealed. One example of such a package is the so-called "gable-top" package commonly known by the trade name Tetra Rex (registered trademark).

The above packages are normally fitted with reclosable opening devices to protect the content of the packages against external agents, and to permit consumption of the food product.

The most commonly used opening devices comprise a frame defining an opening and fitted about a pierceable or removable portion of the top wall of the package; and a cap hinged or screwed to the frame and which can be removed to open the package. Other, e.g. slidable, opening devices are also known to be used.

The pierceable portion of the package may be defined, for example, by a so-called "prelaminated" hole, i.e. a hole formed in the fibrous layer of the packaging material before the fibrous layer is joined to the barrier layer, which thus closes the hole to ensure hermetic, aseptic sealing, while at the same time being easily pierced.

In the case of aseptic packaging machines, the opening devices described are normally fitted continuously straight on to the formed packages.

Known units for applying opening devices substantially comprise a conveyor, e.g. a belt or chain conveyor, having a number of push members for feeding the packages successively along a normally straight transfer path; first heating means for locally heating the packages at the pierceable portions; second heating means for heating the opening devices; and actuating means activated selectively along the transfer path to apply the heated opening devices to the hot pierceable portions of the respective packages.

While providing for satisfactory application of the opening devices to the respective packages, known units still leave room for further improvement. In particular a demand exists in the industry for some way of ensuring the packages are positioned correctly on the conveyor, and so ensuring the opening devices are centered properly with respect to the pierceable portions of the packages.

Applying the opening device in the wrong position may result in various problems, such as poor adhesion to the package and malfunctioning of the opening device itself, which in turn may result in difficulty in opening the package, product leakage, or splashing when the product is poured out.

It is an object of the present invention to provide a conveyor assembly for a unit for applying opening devices to sealed packages of pourable food products, designed to provide a straightforward, low-cost solution to the aforementioned drawbacks.

According to the present invention, there is provided a conveyor assembly for a unit for applying opening devices to sealed packages of pourable food products and at pierceable portions of the packages, said conveyor assembly being characterized by comprising a number of supporting and conveying devices for feeding respective said packages along a transfer path; each said supporting and conveying device comprising a frame movable along said transfer path; and supporting means supporting a respective said package and fitted to said frame so as to move in a first and a second direction perpendicular to each other, and so enable the position of the package to be adjusted prior to application of the respective said opening device.

A preferred, non-limiting embodiment of the present invention will be described by way of example with reference to the accompanying drawings, in which:
Figure 1 shows a top plan view, with parts removed for clarity, of a conveyor assembly, in accordance with the present invention, for a unit for applying opening devices to sealed packages of pourable food products;
Figure 2 shows a larger-scale view in perspective of a device for supporting and conveying a respective package in accordance with the present invention and forming part of the Figure 1 conveyor assembly;
Figure 3 shows a top plan view, with parts removed for clarity, of a detail of the Figure 2 supporting and conveying device;
Figure 4 shows a section along line IV-IV in Figure 3;
Figure 5 shows a section along line V-V in Figure 3;
Figure 6 shows a larger-scale top plan view of a detail of the Figure 1 conveyor assembly.

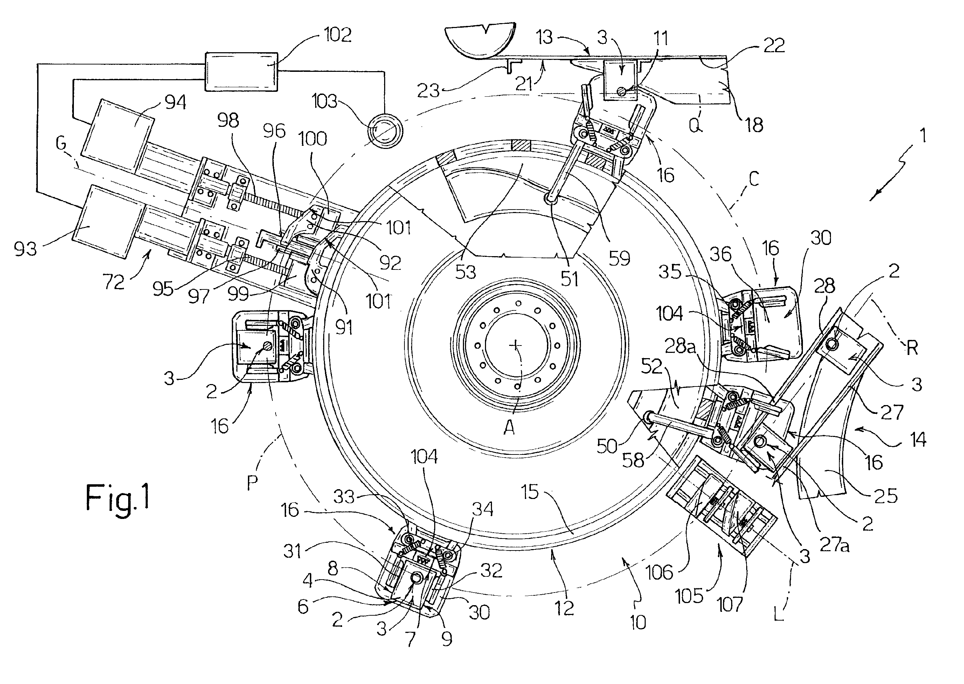

Number 1 in Figure 1 indicates as a whole a conveyor assembly for a unit 10 for applying reclosable, e.g. screw or hinged, opening devices 2 to respective sealed, aseptic, parallelepiped-shaped packages 3 of a pourable food product such as pasteurized or UHT milk, fruit juice, wine, etc.

Unit 10 may be incorporated in a packaging machine (not shown) for continuously producing packages 3 from a tube of packaging material (not shown).

The tube is formed in known manner upstream from unit 10 by longitudinally folding and sealing a known web (not shown) of heat-seal sheet material, which is defined by a layer of fibrous material, e.g. paper, covered, on the side eventually forming the outside of packages 3, with a layer of thermoplastic material, e.g. polyethylene, and, on the side eventually contacting the food product, with a layer of thermoplastic material and a layer of barrier material, e.g. an aluminium sheet, in turn covered with thermoplastic material.

The tube of packaging material is then filled with the food product for packaging, and is sealed and cut at equally spaced cross sections to form pillow packs; the pillow packs are then subjected to a series of mechanical folding operations to form respective parallelepiped-shaped packages 3, which are then fed successively to unit 10 to apply, e.g. heat seal, respective opening devices 2.

Each package 3 is defined by a top wall 4 for receiving respective opening device 2; by an opposite bottom wall (not shown in the accompanying drawings); by a front and rear wall 6, 7; and by two opposite lateral walls 8, 9.

On top wall 4 and adjacent to front wall 6, each package 3 has a circular pierceable portion 11, to which a respective opening device 2 is eventually applied by unit 10, and which is at least partly detachable from top wall 4 using opening device 2 in known manner.

In the example shown, pierceable portion 11 of packages 3 is defined by a so-called "prelaminated" hole, i.e. a hole formed in the fibrous layer of the packaging material before the fibrous layer is joined to the barrier layer, which thus closes the hole to ensure hermetic, aseptic sealing, while at the same time being easily pierced.

Alternatively, opening devices 2 may advantageously be applied by unit 10 to packages other than the type described above, e.g. nonaseptic packages of pourable food products such as pasteurized milk, the packaging material of which is defined by a layer of fibrous material covered on both sides with layers of heat-seal plastic material and having, on a top wall of the package, a pierceable portion defined by a preferential tear line normally defined by a succession of perforations.

Conveyor assembly 1 comprises a rotary conveyor 12 for feeding packages 3 successively from a supply station 13 to an output station 14 along a curved transfer path P, of axis A, along a portion of which, opening devices 2 are heat sealed continuously over pierceable portions 11 of respective packages 3 in known manner not described by not forming part of the present invention.

Rotary conveyor 12 substantially comprises a cylindrical, annular rotary table 15 of axis A; and a number of identical supporting and conveying devices 16 for supporting and conveying packages 3, and which are fixed to and project from a radially outer surface of table 15, and are equally spaced angularly about axis A.

As table 15 rotates about axis A, supporting and conveying devices 16 are fed along a circular path C coincident, between supply and output stations 13 and 14, with transfer path P of packages 3.

Supply station 13 comprises an elongated straight guide surface 18 defining an extension of a belt conveyor (not shown) for supplying packages 3, and extending on one side of rotary conveyor 12, substantially tangent to path P; and an actuating device 21 for pushing packages 3 in a predetermined sequence along guide surface 18.

More specifically, guide surface 18 defines a feed path Q, along which packages 3 are fed, and which extends tangent to and in the same direction as path P at the point of tangency. Packages 3 are fed to rotary conveyor 12 in a vertical position (Figure 1), i.e. with pierceable portion 11, to which respective opening device 2 is eventually applied, facing upwards.

Actuating device 21 is located on the opposite side of guide surface 18 to the side facing rotary conveyor 12, and comprises a conveyor belt 22, which is looped about two pulleys (only one shown partly in Figure 1) having respective axes perpendicular to guide surface 18, and supports externally a number of substantially L-shaped paddles 23 equally spaced along belt 22 and each of which pushes the upstream lateral wall 8 of a respective package 3 to feed the package along path Q to rotary conveyor 12.

Output station 14 comprises an endless, flat, horizontal conveyor belt 25 (shown only partly in Figure 1), a curved portion of which is substantially externally tangent to rotary conveyor 12, and is supplied by rotary conveyor 12 with packages 3 complete with respective opening devices 2.

In the example shown, supply station 13 and output station 14 are spaced from 180° to 270° apart with respect to axis A and in the rotation direction of table 15.

On leaving rotary conveyor 12, packages 3 are guided by two parallel lateral rails 27, 28 defining respective slideways for the front and rear walls 6, 7 of packages 3. Together with conveyor belt 25, rails 27 and 28 define an output path R of packages 3, tangent to and in the same direction as path P at the point of tangency.

More specifically, rails 27, 28 are defined by elongated sections extending along part of the opposite sides of conveyor belt 25 and having respective straight end portions 27a, 28a projecting tangentially from conveyor belt 25 towards rotary conveyor 12 to guide packages 3 out of respective supporting and conveying devices 16. More specifically, end portion 28a of the outermost rail 28, with reference to conveyor belt 25, extends through the supporting and conveying devices 16 traveling through output station 14, so as to assist withdrawal of respective packages 3 from rotary conveyor 12.

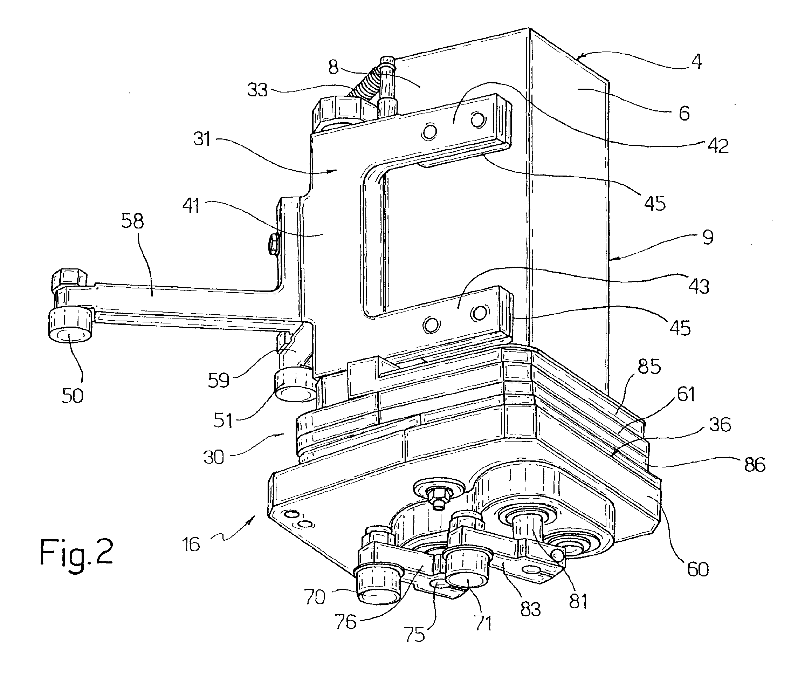

With reference to Figures 1 and 2, each supporting and conveying device 16 comprises an L-shaped main structure 30 fixed to the radially outer surface of table 15 and defining a support for the bottom wall and rear wall 7 of a respective vertically positioned package 3; two lateral retaining members 31, 32 carried movably by main structure 30 and cooperating respectively, with reference to path P, with the up- and downstream lateral walls 8, 9 of package 3; and two cylindrical helical return springs 33, 34 interposed between main structure 30 and respective retaining members 31, 32, and acting on retaining members 31, 32 to keep them in a closed position gripping respective package 3 on main structure 30.

More specifically, main structure 30 comprises an upright or vertical plate 35 fixed integrally to the radially outer surface of table 15 and for receiving rear wall 7 of a respective package 3; and a horizontal, substantially flat rectangular base 36 projecting perpendicularly from upright 35, defining a support for the bottom wall of package 3, and extending coplanar with guide surface 18 and conveyor belt 25.

Retaining members 31, 32 of each supporting and conveying device 16 are hinged about respective pins along respective opposite vertical sides of upright 35, and are maintained by springs 33, 34 in a position substantially perpendicular to upright 35.

Each retaining member 31, 32 is substantially C-shaped and comprises a prismatic vertical bar portion 41 through which the respective hinge pin extends longitudinally; and two arms 42, 43 projecting perpendicularly from the top and bottom end respectively of bar portion 41, and which cooperate with a relative lateral wall 8, 9 of the package 3 carried on main structure 30. At output station 14, the gap between arms 42, 43 of each retaining member 31, 32 is penetrated, as table 15 rotates, by end portion 28a of rail 28.

More specifically, each supporting and conveying device 16 also comprises a number of supporting plates 45 (shown only partly in Figure 2) made of plastic material, fixed to each arm 42, 43 of retaining members 31, 32 and close to the top and bottom edges of upright 35, and which provide for cushioning and safeguarding respective package 3 against damage by sharp metal edges.

Springs 33, 34 of each supporting and conveying device 16 extend obliquely and diverge between an intermediate portion of upright 35 and respective retaining members 31, 32. More specifically, springs 33, 34 extend from one side of the hinge pins of respective retaining members 31, 32, and each have one end portion fixed to a top edge of upright 35, and an opposite end portion fixed to a top edge of arm 42 of respective retaining member 31, 32.

Each supporting and conveying device 16 also comprises two cam followers 50, 51 carried integrally by respective retaining members 31, 32, and which, as table 15 rotates, roll along respective fixed cams 52, 53 housed inside the cavity defined by table 15, and extending parallel to path C, close to output and supply stations 14 and 13 respectively.

The interaction of each cam 52, 53 and cam follower 50, 51 of respective retaining member 31, 32 provides - in a manner not described in detail, by not forming the object of the present invention - for rotating retaining member 31, 32, about the respective hinge pin and in opposition to respective spring 33, 34, into an open position away from the other retaining member 32, 31 and permitting transfer of a package 3 from guide surface 18 to main structure 30, or from rotary conveyor 12 to conveyor belt 25.

By virtue of each spring 33, 34 extending obliquely between relative upright 35 and respective retaining member 31, 32, and from one side of the hinge pin of respective retaining member 31, 22, the load required to overcome the reaction of spring 33, 34 decreases gradually as retaining member 31, 32 is rotated into the open position. That is, as arms 42, 43 of retaining member 31, 32 move gradually into line with the axis of respective spring 33, 34, the reaction force component of the spring in the opposite direction to that in which arms 42, 43 are moved tends to decrease gradually from a maximum value corresponding to the closed position of retaining member 31, 32.

Each cam follower 50, 51 is defined by a roller fitted idly to the free end of a respective L-shaped bracket 58, 59 fitted integrally to, at the opposite end, and projecting from bar portion 41 of respective retaining member 31, 32. Brackets 58, 59 of each supporting and conveying device 16 extend from the bar portions of respective retaining members 31, 32 in opposite directions to arms 42, 43 and in vertically offset positions, so that respective cam followers 50, 51 operate in different planes. In the example shown, cam followers 50 integral with retaining members 31 are located lower down than cam followers 51.

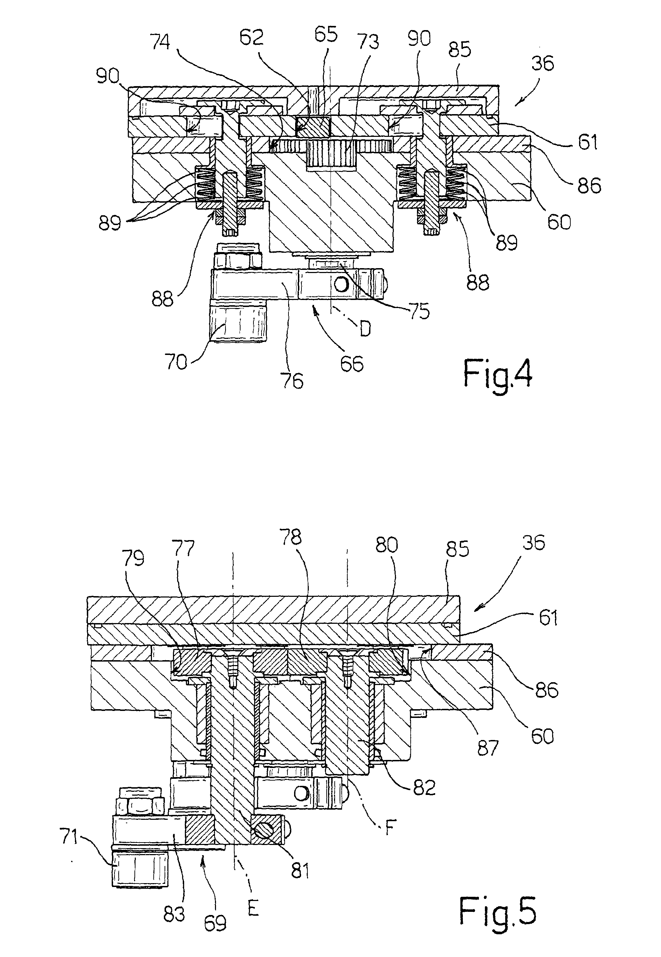

An important aspect of the present invention (Figures 2 to 5) lies in base 36 of each supporting and conveying device 16 substantially comprising a substantially rectangular bottom plate 60 fixed by one edge to, and projecting from, table 15; and a substantially rectangular top plate 61 supporting a respective package 3 and fitted to plate 60 so as to move in two perpendicular directions X, Y coplanar with plate 61 to enable the position of package 3 to be adjusted prior to application of respective opening device 2. More specifically, direction X is tangential with respect to path P, and direction Y radial with respect to path P.

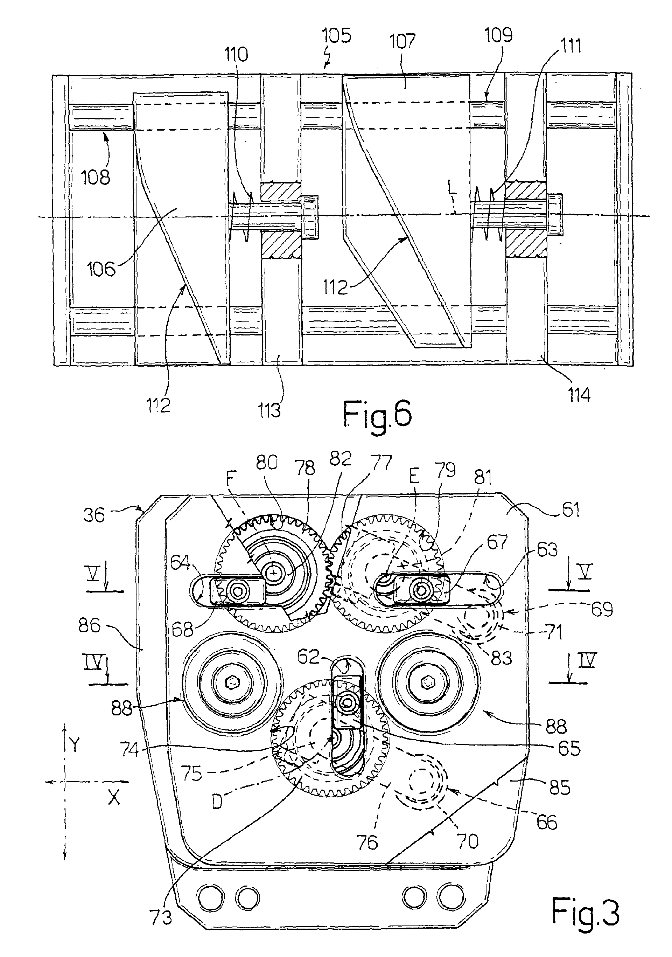

Plate 61 comprises three through slots 62, 63, 64 arranged substantially in a T-shaped configuration, and of which one (62) is elongated in direction Y, and the other two (63, 64) are elongated and aligned with each other in direction X (Figure 3).

Slot 62 is engaged in sliding manner by a substantially parallelepiped-shaped plate 65 defining the output member of an actuating assembly 66 for moving plate 61 in the X direction; and slots 63, 64 are engaged in sliding manner by respective plates 67, 68 identical with plate 65 and defining the output members of an actuating assembly 69 for moving plate 61 in the Y direction.

When plate 65 moves in direction X, plate 61 moves in the same direction and slots 63, 64 slide accordingly with respect to respective plates 67, 68; and similarly, when plates 67, 68 move in direction Y, plate 61 moves in the same direction and slot 62 slides accordingly with respect to plate 65.

Plates 65, 67, 68 engaging respective slots 62, 63, 64 together define a constraint so governing actuating assemblies 66, 69 and plate 61 as to prevent any angular displacement of plate 61 in its plane.

Actuating assemblies 66, 69 are supported by plate 60 and are activated by respective cam followers 70, 71 projecting from the underside of plate 60 and cooperating with an adjustable cam device 72 (shown in Figure 1 and described in detail below) located along path P, downstream from supply station 13 and upstream from the portion of path P along which opening devices 2 are applied to respective packages 3.

With reference to Figures 3 to 5, actuating assembly 66 comprises a cylindrical gear 73, which is housed inside a vertical through seat 74 in plate 60 having an axis D perpendicular to directions X and Y, is connected in rotary and axially-fixed manner to plate 60, supports plate 65 eccentrically on one face surface, and is connected angularly to cam follower 70.

More specifically, gear 73 engages an end opening of seat 74 facing plate 61, and is fitted to a top end portion of a supporting shaft 75 housed in rotary and axially-fixed manner through seat 74. Cam follower 70 is defined by a roller having an axis parallel to axis D and fitted idly to a free end of an arm 76, the opposite end of which is fitted to a bottom end portion of shaft 75 projecting from plate 60.

Similarly, actuating assembly 69 comprises two cylindrical, externally-meshing gears 77, 78, which are housed in respective vertical through seats 79, 80 in plate 60 having respective axes E, F parallel to axis D, are connected in rotary and axially-fixed manner to plate 60, and support respective plates 67, 68 eccentrically on respective face surfaces. Gear 77 is also connected angularly to cam follower 71.

More specifically, each gear 77, 78 engages an end opening of respective seat 79, 80 facing plate 61, and is fitted to a top end portion of a respective supporting shaft 81, 82 housed in rotary and axially-fixed manner through seat 79, 80. Cam follower 71 is defined by a roller having an axis parallel to axes D, E and F, and fitted idly to a free end of an arm 83, the opposite end of which is fitted to a bottom end portion of shaft 81 projecting from plate 60.

Cam followers 70, 71 extend in respective parallel planes.

As shown clearly in Figures 3 to 5, base 36 also comprises a substantially rectangular cover 85 fixed to plate 61 and for directly receiving packages 3; and an intermediate or spacer plate 86 interposed between plates 60 and 61, fixed to plate 60, and defining a central contoured opening 87 engaged by respective portions of gears 73, 77, 78 projecting from the topside of plate 60.

Plates 60, 61 and 86 are packed tightly together by two clamping members 88 acting in opposition to respective series of Belleville washers 89 stacked coaxially and compressed between clamping members 88 and plate 60.

By creating a predetermined amount of sliding friction between plates 61 and 86, the load generated by washers 89 ensures stable positioning of plate 61 following the movements imparted by actuating assemblies 66, 69.

Clamping members 88 are fitted, with a certain amount of lateral clearance, through respective square slots 90 formed in plate 61, and the boundary edges of which define respective stops for plate 61 in directions X and Y.

With reference to Figure 1, cam device 72 substantially comprises a first and second cam 91, 92 positioned facing table 15 and cooperating with respective cam followers 70, 71; and a first and second servomotor 93, 94 for moving respective cams 91, 92 independently of each other and parallel to a direction G substantially radial with respect to path P.

More specifically, cams 91, 92 are mounted to slide along respective fixed guides 95, 96 extending parallel to direction G. In the example shown, cam 91 is located closer to table 15 than cam 92.

Each servomotor 93, 94 has an output member 97, 98 - in the example shown, a rod - rotating about a respective axis parallel to direction G, and having a threaded portion connected to a nut screw 99, 100 fixed to respective cam 91, 92.

On the opposite side to table 15, cams 91, 92 are defined by respective curved work edges 101 cooperating with respective cam followers 70, 71, extending substantially parallel to each other, and increasing gradually in radius in the rotation direction of table 15, i.e. in the traveling direction of supporting and conveying devices 16. Cams 91, 92 also extend in parallel planes.

Servomotors 93, 94 are controlled by an electronic central control unit 102 as a function of a position signal *S*, which is generated by a detecting device 103, e.g. a television camera, located along path P downstream from supply station 13 and upstream from cam device 72, and indicates the position of pierceable portion 11 of each package 3 on relative supporting and conveying device 16. More specifically, performing a series of operations not described by not forming part of the present invention, detecting device 103 determines the position of pierceable portion 11 of each package 3 with respect to optically detectable reference marks 104 on the top edge of upright 35 of relative supporting and conveying device 16.

Interacting with respective cam 91, 92, the location of which in direction G is controlled by relative servomotor 93, 94 as a function of position signal S, each cam follower 70, 71 is movable from a predetermined adjustment-start position to a corrected position within an adjustment-end-position range I defined by two extreme positions corresponding to minimum and maximum displacement of cam follower 70, 71 with respect to the adjustment-start position.

With reference to Figures 1 and 6, conveyor assembly 1 also comprises a reset cam device 105 facing table 15 close to output station 14, and comprising a first and second cam 106, 107 acting on respective cam followers 70, 71 in the opposite direction to cams 91, 92 to move cam followers 70, 71 into the respective adjustment-start positions outside the respective adjustment-end position ranges I, and so ensure cam followers 70, 71 contact respective cams 91, 92 at each cycle, regardless of the position of cams 91, 92 in direction G.

More specifically cams 106, 107 are mounted to slide along respective guides 108, 109 in a substantially radial direction L with respect to path P, and are loaded in direction L towards table 15 by respective springs 110, 111 shown schematically in Figures 1 and 6. In the example shown, cam 106 is located ahead of cam 107 in direction L.

More specifically, cams 106, 107 extend in parallel planes and are defined, towards table 15, by respective curved work edges 112 cooperating with respective cam followers 70, 71, extending substantially parallel to each other, and decreasing gradually in radius with respect to axis A in the rotation direction of table 15, i.e. in the traveling direction of supporting and conveying devices 16.

Each spring 110, 111 extends between a respective fixed stop 113, 114 and the edge of respective cam 106, 107 opposite work edge 112, and is of such a stiffness as to only flex under compression at a downstream end portion of work edge 112 where respective cam follower 70, 71 is detached. This is due to the work edge 112 of each cam 106, 107 being so designed as to move respective cam follower 70, 71 into a theoretical position beyond the relative adjustment-start position and made inaccessible by the size of slots 90 engaging clamping members 88.

As such, the work edges 112 of cams 106, 107 need not be particularly accurate and may therefore be made relatively cheaply. Moreover, any wear of work edges 112 of cams 106, 107, due to continual engagement by cam followers 70, 71, in no way impairs the ability of reset device 105 to reset cam followers 70, 71 to the respective adjustment-start positions.

Operation of conveyor assembly 1 and unit 10 will be described with reference to one package 3, and as of an initial condition in which package 3 is located at the downstream end of guide surface 18 pending transfer to the adjacent supporting and conveying device 16.

More specifically, package 3 is fed along guide surface 18 in a vertical position, i.e. with pierceable portion 11 facing upwards, and is pushed by a respective paddle 23 of actuating device 21 on to cover 85 of base 36 of the adjacent supporting and conveying device 16. At this stage, transfer of package 3 on to supporting and conveying device 16 is assisted by the downstream retaining member 32, in the direction of path P, being maintained in the open position by cam follower 51 of the retaining member interacting with cam 53.

Once package 3 is positioned with rear wall 7 resting against upright 35 of supporting and conveying device 16 with the interposition of supporting plates 45, retaining member 32 is moved back into the closed position by cam follower 51 gradually disengaging cam 53 and by the pull exerted by respective spring 34.

Further rotation of table 15 feeds supporting and conveying device 16 past television camera detecting device 103, which determines the position of pierceable portion 11 of package 3 on device 16 with respect to the reference marks 104 on the top edge of upright 35, and generates a corresponding position signal S.

On the basis of position signal S, central control unit 102 commands servomotors 93, 94 to move respective cams 91, 92 parallel to direction G and into respective corrected work positions.

As supporting and conveying device 16 travels past cam device 72, the roller of each cam follower 70, 71 rolls along the work edge 101 of respective cam 91, 92 and is moved from the adjustment-start position - the position the roller was in on engaging cam 91, 92 - into a final corrected position.

The position correction of cam follower 70 accordingly rotates shaft 75 and respective gear 73 about axis D, so that plate 65, fixed eccentrically to gear 73, travels along a curved trajectory of axis D, the X-direction component of which moves plate 61 in the same direction and accordingly slides slots 63, 64 with respect to plates 67, 68, while the Y-direction component slides plate 65 along respective slot 62 and is not transmitted to plate 61.

In exactly the same way, the position correction of cam follower 71 accordingly rotates shaft 81 and respective gear 77 about axis E, and, by virtue of gears 77 and 78 meshing with each other, accordingly rotates gear 78 and respective shaft 82 about axis F in the opposite direction, so that plates 67, 68, fixed eccentrically to respective gears 77, 78, travel along respective curved trajectories of respective axes E and F, the Y-direction components of which move plate 61 in the same direction and accordingly slides slot 62 with respect to plate 65, while the X-direction components slide plates 67, 68 in opposite directions along respective slots 63, 64 and are not transmitted to plate 61.

At this stage, the overall displacement of plate 61 in the X and Y directions so positions package 3 as to ensure opening device 2 is applied centrally to pierceable portion 11.

Opening device 2 is heat sealed to top wall 4 of package 3 along the portion of path P immediately downstream from cam device 72; in the course of which, package 3 is clamped by retaining members 31, 32 in a stable position on main structure 30 of supporting and conveying device 16.

Once the heat-seal operation is completed, further rotation of table 15 causes cam followers 70, 71 to interact with respective cams 106, 107 of reset device 105, by which they are moved back, as stated, into the respective adjustment-start positions outside the respective ranges I of positions assumable by cam followers 70, 71 interacting with cam device 72, so that engagement of cams 91, 92 by respective cam followers 70, 71 at the next cycle is ensured, regardless of the position of cams 91, 92 in direction G.

At this point, as supporting and conveying device 16 is fed along path P, cam follower 50 of retaining member 31 interacts with cam 52 to rotate retaining member 31 about the respective hinge pin into the open position.

At this stage, as table 15 rotates about axis A, end portion 28a of rail 28 is inserted between arms 42, 43 first of retaining member 32 and then of retaining member 31, and is interposed between upright 35 and rear wall 7 of package 3 to guide the package off rotary conveyor 12 and on to conveyor belt 25.

At this stage, the base 36 of supporting and conveying device 16 is substantially externally tangent to the adjacent curved portion of conveyor belt 25, so that package 3, as table 15 rotates and guided by rails 27 and 28, slides off base 36 on to conveyor belt 25. Rotation of retaining member 31 into the open position provides for easing package 3, smoothly and with substantially no slippage, off rotary conveyor 12.

Once the package is transferred, retaining member 31 is moved back into the closed position by cam follower 50 gradually disengaging cam 52, and by the pull exerted by respective spring 33.

Before supporting and conveying device 16 reaches supply station 13, retaining member 32 is again moved into the open position by respective cam follower 51 interacting with cam 53.

The advantages of conveyor assembly 1 according to the present invention will be clear from the foregoing description.

In particular, by providing each supporting and conveying device 16 with a package support (cover 85 and plate 61) movable in two perpendicular directions X, Y, the position of each package 3 can be adjusted, as table 15 rotates, to ensure opening devices 2 are applied centrally to pierceable portions 11 of packages 3.

This provides, as compared with known application units, for greatly improving both adhesion of opening devices 2 to the packaging material and operation of opening devices 2 themselves.

Clearly, changes may be made to conveyor assembly 1 as described and illustrated herein without, however, departing from the scope of the accompanying Claims.

## Claims

1. A conveyor assembly (1) for a unit (10) for applying opening devices (2) to sealed packages (3) of pourable food products and at pierceable portions (11) of the packages (3), said conveyor assembly (1) being **characterized by** comprising a number of supporting and conveying devices (16) for feeding respective said packages (3) along a transfer path (P); each said supporting and conveying device (16) comprising a frame (35, 60, 86) movable along said transfer path (P); and supporting means (61, 85) supporting a respective said package (3) and fitted to said frame (35, 60, 86) so as to move in a first and a second direction (X, Y) perpendicular to each other, and so enable the position of the package (3) to be adjusted prior to application of the respective said opening device (2).

2. An assembly as claimed in Claim 1, **characterized in that** said transfer path (P) is substantially circular; said first direction (X) being tangential with respect to said transfer path (P), and said second direction (Y) being radial with respect to the transfer path (P).

3. An assembly as claimed in Claim 2, **characterized in that** said supporting and conveying devices (16) are carried externally by and project from a rotary table (15) and are equally spaced angularly.

4. An assembly as claimed in any one of the foregoing Claims, **characterized by** comprising, for each said supporting and conveying device (16), first push means (65, 66) carried movably by said frame (35, 60, 86) and connected to said supporting means (61, 85) positively in said first direction (X) and with the possibility of relative motion in said second direction (Y); and second push means (67, 68, 69) carried movably by said frame (35, 60, 86) and connected to said supporting means (61, 85) positively in said second direction (Y) and with the possibility of relative motion in said first direction (X).

5. An assembly as claimed in Claim 4, **characterized by** comprising detecting means (103) located along said transfer path (P), upstream from the portion of the transfer path (P) along which said opening devices (2) are applied, and generating a position signal (S) indicating the position assumed by said pierceable portion (11) of each said package (3) with respect to reference means (104) provided on said frame (35, 60, 86) of the relative said supporting and conveying device (16); said conveyor assembly (1) also comprising first and second actuating means (91, 92) located along said transfer path (P), downstream from said detecting means (103), and interacting respectively with said first and second push means (65, 66; 67, 68, 69) to move them along respective work trajectories as a function of said position signal (S).

6. An assembly as claimed in any one of the foregoing Claims, **characterized in that** said frame has substantially an L-shaped structure, and comprises a horizontal base plate (60) and an upright (35); and **in that** said supporting means comprise a supporting plate (61) for supporting said packages (3), and which is located on said base plate (60) and is movable with respect to the base plate (60) in said first and second direction (X, Y).

7. An assembly as claimed in Claim 6, **characterized in that** said first push means comprise at least a first engaging member (65) mounted to slide inside a first slot (62) formed in said supporting plate (61) and elongated in said second direction (Y); and first activating means (66) carried by said frame (35, 60, 86), connected to said first engaging member (65), and interacting with said first actuating means (91); and **in that** said second push means comprise at least two second engaging members (67, 68) mounted to slide inside respective second slots (63, 64) formed in said supporting plate (61) and elongated and aligned with each other in said first direction (X); and second activating means (69) carried by said frame (35, 60, 86), connected to said second engaging members (67, 68), and interacting with said second actuating means (92).

8. An assembly as claimed in Claim 7, **characterized in that** said first activating means (66) comprise a first gear (73) supporting said first engaging member (65) eccentrically, and fitted through said base plate (60) to rotate about a first axis (D), and a first cam follower (70) connected angularly to said first gear (73); said second activating means (69) comprising two second gears (77, 78) supporting respective said second engaging members (67, 68) eccentrically, and fitted through said base plate (60) to rotate about respective axes (E, F), and a second cam follower (71) connected angularly to one (77) of said second gears (77, 78); said first and second actuating means respectively comprising a first and a second cam (91, 92) cooperating respectively in rolling manner with said first and second cam followers (70, 71) of said supporting and conveying devices (16), and movable, independently of each other and as a function of said position signal (S), parallel to a travel direction (G) crosswise to said transfer path (P).

9. An assembly as claimed in Claim 8, **characterized by** comprising a first and a second reset cam member (106, 107) located along said transfer path (P), downstream from the portion of the transfer path (P) along which said opening devices (2) are applied, and acting respectively on said first and second cam followers (70, 71), in the opposite direction to that of said first and second cam (91, 92), to move the first and second cam followers (70, 71) into respective adjustment-start positions outside respective ranges of adjustment-end positions assumable by said first and second cam followers (70, 71) by interacting with said first and second cam (91, 92).

10. An assembly as claimed in any one of the foregoing Claims, **characterized in that** each said supporting and conveying device (16) comprises two lateral retaining members (31, 32) carried movably by said frame (35, 60, 86) and cooperating with opposite lateral walls (8, 9) of said package (3) arranged successively along said transfer path (P); closing means (33, 34) acting on said retaining members (31, 32) to keep them in a closed position gripping said package (3) on said frame; and control means (50, 51) acting on each said retaining member (31, 32), at predetermined locations along said transfer path (P), to move the retaining member (31, 32) into an open position away from the other said retaining member (32, 31).
